# EUROPEAN PATENT APPLICATION

(11) **EP 4 439 848 A1**
(43) Date of publication of application: **02.10.2024**
(21) Application number: 24161359.5
(22) Date of filing: 05.03.2024
(51) Int. Cl.: H01M 50/507, H01M 50/557, H01M 50/207, H01M 50/244, H01M 50/264, H01M 50/291, H01M 50/293, H01M 50/55

(54) **BATTERY MODULE**

(30) Priority: 26.03.2023 KR 20230039358; 10.04.2023 KR 20230046984
(71) Applicant: Samsung SDI Co., Ltd., Yongin-si, Gyeonggi-do 17084 (KR)
(72) Inventor: PARK, Daeyoung, 17084 Yongin-si (KR)
(74) Representative: Marks & Clerk LLP

(57) **Abstract**

A battery module includes a number of battery cells (100), a bus bar at a side of the battery cells, a bus bar holder (300) supporting the bus bar, a side plate (400) on side surfaces of the battery cells, and a coupling member (600)including a first coupling portion (610) between the battery cells (100) and the bus bar holder (300), a second coupling portion (620) between the bus bar holder (300) and the side plate (400), and a third coupling portion (630) between the side plate (400) and the battery cells (100). The coupling member couples the battery cells, the bus bar, and the bus bar holder together.

## Description

### BACKGROUND

### 1. Field

One or more embodiments relate to a battery module.

### 2. Description of the Related Art

A secondary battery refers to a chargeable and dischargeable battery, unlike a primary battery that is not rechargeable. Secondary batteries are used as energy sources for mobile devices, electric vehicles, hybrid vehicles, electric bicycles, uninterruptible power supplies, etc., in the form of a single battery or in the form of a module in which multiple battery cells are connected and grouped into one unit, depending on the type of external device in which the secondary battery(ies) are utilized.

A battery module includes a frame for supporting a plurality of cells, a bus bar, and a bus bar holder for preventing electricity flowing through the bus bar from being short-circuited and easily coupling the bus bar to the frame. To fix an existing battery module, the battery cells and the frame or the frame and the bus bar holder are welded to each other. However, as the battery module is enlarged, the weight and size of the battery module increase, which weakens the structural rigidity of the battery module.

The above-described background technology is technical information that the inventors possessed for deriving the disclosure or was acquired in the process of deriving the disclosure, and is not necessarily a known technology disclosed to the general public prior to filing of the present application.

### SUMMARY

One or more embodiments include a battery module to improve structural rigidity thereof.

Additional aspects will be set forth in part in the description which follows and, in part, will be apparent from the description, or may be learned by practice of the presented embodiments of the disclosure.

According to one or more embodiments, a battery module includes a number of battery cells, a bus bar at a side of the battery cells, a bus bar holder supporting the bus bar, a side plate on side surfaces of the battery cells, and a coupling member including a first coupling portion between the battery cells and the bus bar holder, a second coupling portion between the bus bar holder and the side plate, and a third coupling portion between the side plate and the battery cells. The coupling member couples the battery cell, the bus bar, and the bus bar holder together.

At least some of the above and other features of the invention are set out in the claims.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is an exploded perspective view of a battery module according to an embodiment of the present disclosure;
FIG. 2 is an assembled perspective view of a battery module according to an embodiment of the present disclosure;
FIG. 3 illustrates a side plate and a coupling member, according to an embodiment of the present disclosure;
FIGS. 4 and 5 illustrate a state in which a side plate and a coupling member according to an embodiment of the present disclosure are coupled to a battery cell and a bus bar holder;
FIG. 6 is an enlarged view of a region VI in FIG. 5; and
FIGS. 7 to 12 are enlarged views of part of a battery module according to other embodiments of the present disclosure.

### DETAILED DESCRIPTION

Reference will now be made in detail to embodiments, examples of which are illustrated in the accompanying drawings, wherein like reference numerals refer to like components throughout. In this regard, the present embodiments may have different forms and should not be construed as being limited to the descriptions set forth herein. Accordingly, the embodiments are merely described below, by referring to the figures, to explain aspects of the present description. Expressions such as "at least one of," when preceding a list of components, modify the entire list of components and do not modify the individual components of the list.

The disclosure includes various embodiments and variations, and specific embodiments will be shown in the drawings and described in the description below. The disclosure is not limited to specific embodiments, and includes all modifications, equivalents, and substitutes included in the spirit and scope of the disclosure.

In the following embodiments, the terms first, second, etc., have been used to distinguish one component from other components, rather than limiting. In the following embodiment, singular forms include plural forms unless apparently indicated otherwise contextually. It should be understood that the term "include", "have", or the like in the following embodiments is to indicate the presence of features, numbers, steps, operations, elements, parts, or a combination thereof described in the specifications, and does not exclude the presence or addition of one or more other features, numbers, steps, operations, elements, parts, or a combination thereof. In the following embodiment, an x-axis, a y-axis, and a z-axis are not limited to three axes on an orthogonal coordinate system, and may be interpreted in a broad sense including them. For example, the x-axis, the y-axis, and the z-axis may be orthogonal to each other, but may also refer to different directions that are not orthogonal to each other.

In the drawings, the size of components may be exaggerated or reduced for convenience of description. For example, the size and thickness of each component shown in the drawings are shown for convenience of description, and thus the disclosure is not necessarily limited to the illustration.

When a certain embodiment may be implemented otherwise, a particular process order may be performed differently from the order described. For example, two processes described in succession may be performed substantially simultaneously, or may be performed in an order reverse to the order described.

The term "or" set forth in the description of the disclosure includes a case including both "A" and "B" as well as a case including one of "A" and "B" unless the meaning thereof is specified.

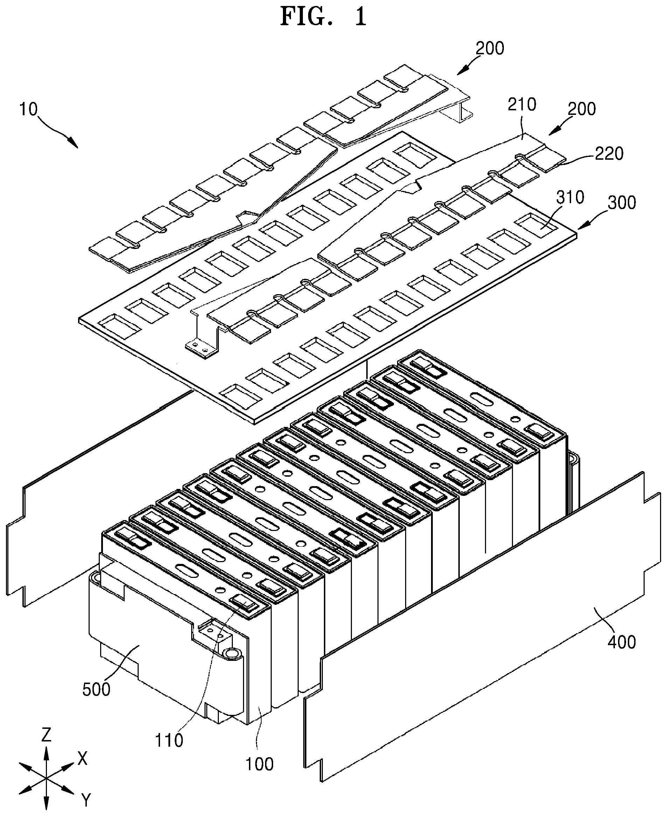

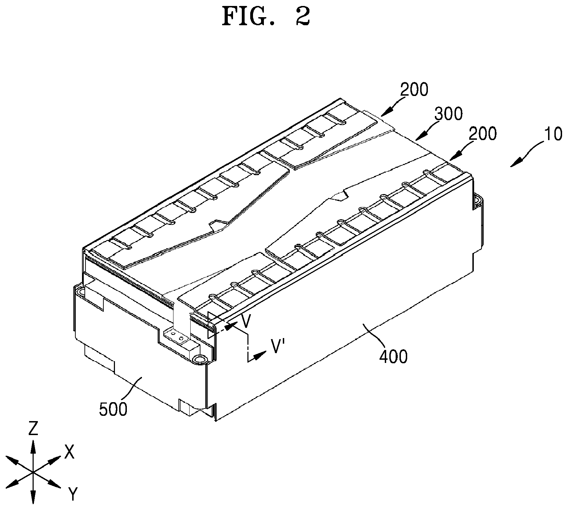

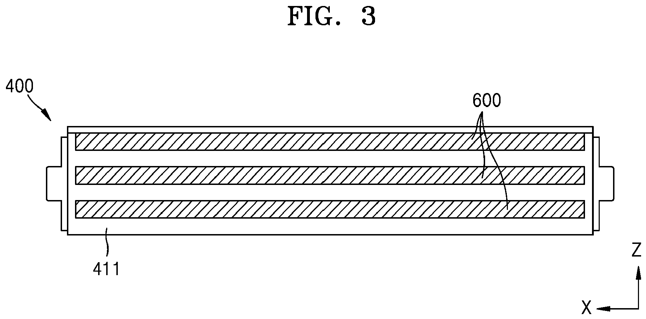

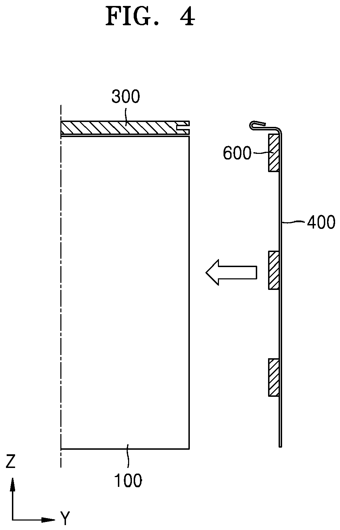

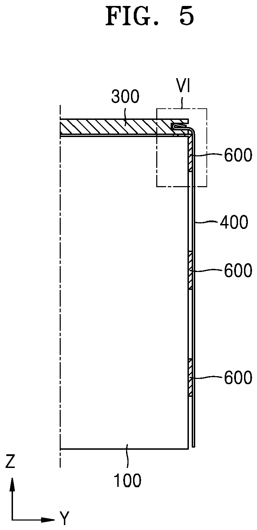

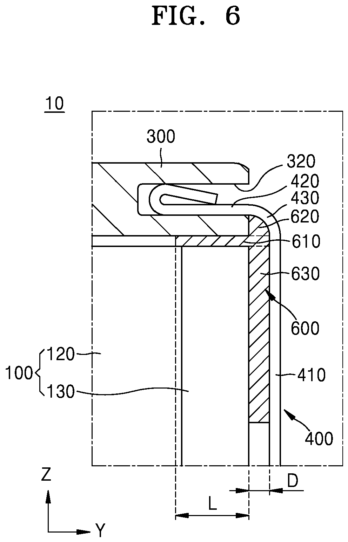

FIG. 1 is an exploded perspective view of a battery module 10 according to an embodiment, FIG. 2 is an assembled perspective view of the battery module 10 according to an embodiment, FIG. 3 illustrates a side plate 400 and a coupling member 600, according to an embodiment, FIGS. 4 and 5 show a state where the side plate 400 and the coupling member 600 according to an embodiment are coupled to a battery cell 100 and a bus bar holder 300, in which FIG. 5 is an enlarged view of V - V' in FIG. 2, and FIG. 6 is an enlarged view of a region VI in FIG. 5.

Referring to FIGS. 1 to 6, the battery module 10 according to an embodiment may include a plurality of battery cells 100. The battery module 10 may be used alone or may form a battery pack together with another battery module 10. In an embodiment, the plurality of battery modules 10 may be electrically connected to each other through a module bus bar, etc., to form the battery pack. The battery module 10 may be used as a power source for vehicles, ships, aircrafts, etc. Alternatively, the battery module 10 may be used for electronic devices such as laptops, tablets, etc.

The battery module 10 according to an embodiment may include the battery cells 100, a bus bar 200, the bus bar holder 300, the side plate 400, an end plate 500, and the coupling member 600.

A plurality of battery cells 100 may be disposed in the battery module 10 and may be electrically connected to each other through the bus bar 200. In an embodiment, as shown in FIG. 1, the battery cell 100 may be a prismatic cell in the shape of a thin rectangular parallelepiped or flat plate, and a plurality of battery cells 100 may be disposed in a length direction (an X-axis direction in FIG. 1) of the battery module 10. Each of the plurality of battery cells 100 may include one or more electrodes 110 on an upper end thereof, and the plurality of battery cells 100 may be electrically connected to each other through the bus bar 200. In an embodiment, each battery cell 100 may include two electrodes 110 having different polarities on a top surface thereof.

Although the prismatic battery cell 100 is shown in FIG. 1, the disclosure is not limited thereto. In an embodiment, the battery cell 100 may have various shapes such as a cylindrical shape, a can shape, a pouch shape, etc. Also, the number of battery cells 100 may not be particularly limited and may be appropriately selected according to a desired capacity of the battery module 10.

The bus bar 200 may be disposed at one side (e.g., the upper side) of the battery cells 100 to electrically connect the plurality of battery cells 100 to each other. In an embodiment, as shown in FIGS. 1 and 2, the bus bar 200 may be disposed on the battery module 10 to connect the same polarities of the electrodes 110 of the plurality of battery cells 100 to each other. The bus bar 200 may include a conductive material such as metal, etc., and a plurality of bus bars 200 may be provided, each of which may include a bus bar body 210 and a connecting portion 220. The connecting portion 220 may extend in a direction (e.g., laterally in the Y-axis direction) from the bus bar body 210, and one bus bar body 210 may include a plurality of connecting portions 220. Each connecting portion 220 may contact the electrode 110 exposed through an opening 310 of a bus bar holder 300.

The bus bar holder 300 may be disposed at a side (e.g., the upper side) of the battery module 10 to support the plurality of bus bars 200 and the side plate 400. In an embodiment, as shown in FIGS. 1 and 2, the bus bar holder 300 may be disposed on the top surface of the battery module 10. The bus bar holder 300 may include the same number of openings 310 as the electrodes 110 and the openings 310 may be located at positions corresponding to the electrodes 110 to expose the electrodes 110 of the plurality of battery cells 100. Each opening 310 may have a shape corresponding to the electrode 110 and expose the electrode 110 to the outside in a configuration in which the bus bar holder 300 is seated on the battery module 10. The connecting portion 220 of the bus bar 200 may be disposed above the opening 310 to contact the electrode 110.

In an embodiment, the bus bar holder 300 may be coupled to the battery cell 100 and the side plate 400 through a coupling member 600 described later.

The side plate 400 may be disposed at a side of the battery module 10 to protect the plurality of battery cells 100 from an external impact and an external foreign substance and may form a frame of the battery module 10. In an embodiment, as shown in FIGS. 1 and 2, the side plates 400 may be respectively disposed on opposite side surfaces of the battery module 10 to cover the plurality of battery cells 100 (e.g., the battery module 10 may include a pair of opposing side plates 400 on opposite sides of the battery cells 100).

In an embodiment, opposite ends of the side plate 400 may protrude in the length direction (the X-axis direction in FIG. 1), thus being connected to the end plate 500. A protrusion portion of the side plate 400 may be connected to the end plate 500 through laser welding, a bolt, an adhesive, etc.

In an embodiment, the coupling member 600 may be disposed on an inner surface 411 of the side plate 400. As shown in FIG. 3, the side plate 400 may be coupled to the battery cell 100 and the bus bar holder 300 through one or more coupling members 600 disposed on the inner surface 411 facing the battery module 10. In an embodiment, three coupling members 600 may be disposed on the inner surface 411 of the side plate 400 in the length direction (X-axis direction) in such a way to be spaced apart from each other in a height direction (Z-axis direction).

The end plate 500 may be disposed at a side of the battery module 10 to protect the plurality of battery cells 100 from an external impact and an external foreign substance (e.g., foreign object debris (FOD)) and may form a frame of the battery module 10 together with the side plate 400. In an embodiment, as shown in FIGS. 1 and 2, the end plates 500 may be respectively disposed at opposite ends of the battery module 10 in the length direction (the X-axis direction in FIG. 1), thus being connected to the opposite ends of the side plate 400. That is, the side plates 400 extend in the z-x plane, and the end plates 500 extend in the z-y plane).

The coupling member 600 may couple components of the battery module 10 to each other. In an embodiment, the coupling member 600 may be disposed on the inner surface 411 of the side plate 400 to couple the bus bar holder 300, the side plate 400, and the end plate 500 to each other.

In an embodiment, the coupling member 600 may be a structural liquid adhesive. A shear strength of the coupling member 600 may be about 2 MPa or greater between stainless steel and PET and about 2 MPa or greater between Al alloy 3003 and PET. Thus, the coupling member 600 may couple the side plate 400 including stainless steel with an Al alloy portion and a PET portion of the battery cell 100 with superior shear strength.

A coupling state of the battery module 10 according to an embodiment will be described in more detail with reference to FIGS. 3 to 6.

As shown in FIG. 3, a plurality of coupling members 600 may be arranged on the inner surface 411 of the side plate 400. The coupling member 600 may be disposed linearly in the length direction (X-axis direction) of the inner surface 411 and may have a length to cover the plurality of battery cells 100 in the length direction (the X-axis direction in FIG. 3) of the battery module 10. The coupling member 600 may continuously extend without interruption in the length direction (X-axis direction) of the battery module 10. Alternatively, a plurality of coupling members 600 may be disposed by being segmented in the length direction of the battery module 10.

In an embodiment, the plurality of coupling members 600 may be disposed apart from each other in the height direction (the Z-axis direction in FIG. 3) on the inner surface 411. The coupling member 600 disposed on the upper end among the plurality of coupling members 600 (e.g., the uppermost coupling member 600) may be introduced among the bus bar holder 300, the side plate 400, and the battery cell 100 in a state of the side plate 400 being disposed on a side surface of the battery module 10 to couple them to each other. The other two coupling members 600 may be disposed on side surfaces of the plurality of battery cells 100 to couple the side plate 400 to the battery cell 100.

In an embodiment, the coupling member 600 disposed in the center in the height direction among the plurality of coupling members 600 may be positioned or located to include a central portion of the side plate 400. In addition, the other two coupling members 600 may be spaced apart from the central coupling member 600 at the same distance or different distances above and below, respectively, the central coupling member 600. The plurality of coupling members 600 may be applied with such a thickness and an area that the coupling member 600 does not contact or overlap the adjacent coupling member 600 even when being deformed in a state of being pressed to the side surfaces of the plurality of battery cells 100.

Next, the side plate 400 may be pressed toward the side surfaces of the plurality of battery cells 100 (see FIGS. 4 and 5). Thus, the coupling member 600 (e.g., the uppermost coupling member 600) located on an upper part among the plurality of coupling members 600 may be introduced between the battery cells 100 and the bus bar holder 300 and the battery cells 100 and the side plate 400 to couple them together. The other two coupling members 600 may be applied between the side surface of the battery cells 100 and the side plate 400.

In an embodiment, the top surface of the battery cells 100 may be spaced apart from the bottom surface of the bus bar holder 300. Thus, as shown in FIG. 6, the coupling member 600 (a first coupling portion 610) may be introduced into a space between the battery cells 100 and the bus bar holder 300. The introduced coupling member 600 may couple the battery cells 100 to the bus bar holder 300.

As shown in FIG. 6, the battery cells 100 may include an inner portion 120 and an outer portion 130. The inner portion 120 may include an electrode, a separator, and an electrolyte of the battery cell 100 therein, and the outer portion 130 may protect the inner portion 120 from an external impact and surround the inner portion 120 to prevent a foreign substance from being introduced into the inner portion 120. The inner portion 120 may include metal, e.g., an aluminum alloy (such as Al alloy 3003), and the outer portion 130 may include a high-polymer compound, e.g., PET.

In an embodiment, the bus bar holder 300 may include a first insertion groove 320.

As shown in FIG. 6, the first insertion groove 320 may be opened toward the inner surface 411 of the side plate 400 (e.g., the first insertion groove 320 extends inward along the Y-axis direction). A bent portion 420 of the side plate 400 (located at an upper end of the side plate 400) may be inserted into the first insertion groove 320. The first insertion groove 320 may have a depth greater than lengths of a first coupling portion 610 and the bent portion 420 described below.

In an embodiment, the side plate 400 may include a body portion 410, the bent portion 420, and a connecting portion 430.

The body portion 410 may be disposed on the side surfaces of the plurality of battery cells 100 and extend in the length direction of the battery module 10. The body portion 410 may have a flat plate shape and may extend equal to or longer than the total length of the plurality of battery cells 100.

Although partially omitted in the drawings, the body portion 410 may extend downwardly from the top of the battery module 10, and may be coupled to the plurality of battery cells 100 through the other coupling members 600 than the coupling member 600 located on the upper part.

The bent portion 420 may extend from the body portion 410 toward one side. As shown in FIG. 6 in an embodiment, the bent portion 420 may horizontally extend from the upper end of the body portion 410 toward the inner side of the battery module 10 (e.g., the body portion 410 may extend in the z-x plane, and the bent portion 420 may extend in the y-x plane). At least a part of the bent portion 420 may be inserted into the first insertion groove 320 and be coupled to the bus bar holder 300. In one embodiment, the bent portion 420 may be coupled to the first insertion groove 320 through a mechanical coupling means such as a separate adhesive member, a bolt, etc. Alternatively, the bent portion 420 may be coupled to the first insertion groove 320 through laser welding or the like.

In an embodiment, the bent portion 420 may be inserted into the first insertion groove 320 in a state of a part thereof being bent overlappingly (e.g., bent onto itself). As shown in FIG. 6, a part of the bent portion 420 may be bent in a ring shape and inserted into the first insertion groove 320. The ring shape part of the bent portion 420 may be vertically supported by an inner surface of the first insertion groove 320 such that the bent portion 420 is firmly supported in the first insertion groove 320.

The connecting portion 430 may be disposed between the body portion 410 and the bent portion 420 to connect them to each other. In an embodiment, the body portion 410 and the bent portion 420 may extend in directions perpendicular to each other, and the connecting portion 430 may be disposed between the upper end of the body portion 410 and an outer end of the bent portion 420. The connecting portion 430 may have a curved shape and may be coupled to the bus bar holder 300 by contacting a part of the coupling member 600.

In an embodiment, the coupling member 600 may include a plurality of parts extending in different directions. In an embodiment shown in FIG. 6, the coupling member 600 may include a plurality of parts extending in the height direction (z-axis direction) and the width direction (y-axis direction).

In an embodiment, the coupling member 600 may include a first coupling portion 610, a second coupling portion 620, and a third coupling portion 630.

The first coupling portion 610 may be disposed between the plurality of battery cells 100 and the bus bar holder 300, and may couple the plurality of battery cells 100 to the bus bar holder 300. As shown in FIG. 6, the first coupling portion 610 may extend in the width direction of the battery module 10 (the Y-axis direction in FIG. 6) from the coupling member 600, and may be disposed in a gap between the top surface of the battery cells 100 and the bottom surface of the bus bar holder 300.

In an embodiment, a protruding length of the first coupling portion 610, that is, a length of the first coupling portion 610 starting from the side surface of the battery cells 100 and extending toward the inner side may be L. In an embodiment, the length L may be greater than or equal to about 1 mm (about 0.04 inches) and less than or equal to about 10 mm (about 0.4 inches). In an embodiment, the length L may be greater than or equal to about 3 mm (about 0.12 inches) and less than or equal to about 7 mm (about 0.28 inches). In an embodiment, the length L may be about 5 mm (about 0.2 inches).

In an embodiment, the first coupling portion 610 may be disposed on the outer portion 130 of the battery cells 100. As shown in FIG. 6, the first coupling portion 610 may be disposed on the top surface of the outer portion 130. In one embodiment, the first coupling portion 610 may not overlap the inner portion 120. In another embodiment, a part of the first coupling portion 610 may be disposed on the outer portion 130 of the battery cells 100 and another part of the first coupling portion 610 may be disposed on the top surface of the inner portion 120 of the battery cells 100.

In an embodiment, the first coupling portion 610 may be disposed to overlap the bent portion 420 (or at least a portion thereof). As shown in FIG. 6, the bent portion 420 inserted into the first insertion groove 320 may overlap the first coupling portion 610 in the height direction (z-axis direction). In addition, the length of the bent portion 420 inserted into the first insertion groove 320 may be greater than the length L of the first coupling portion 610.

The second coupling portion 620 may extend from the first coupling portion 610 to a side and may be disposed between the bus bar holder 300 and the side plate 400. In an embodiment, as shown in FIG. 6, the second coupling portion 620 may extend in the height direction (z-axis direction) from the outer end (a side end of the side plate 400) of the first coupling portion 610. The second coupling portion 620 may be disposed between the end of the bus bar holder 300 and the side plate 400 to couple the bus bar holder 300 to the side plate 400.

In an embodiment, the second coupling portion 620 may be disposed to correspond to the connecting portion 430 of the side plate 400. As shown in FIG. 6, the connecting portion 430 may have an outwardly convex shoulder shape, and the second coupling portion 620 may also have a shape corresponding thereto.

The third coupling portion 630 may be disposed between the plurality of battery cells 100 and the side plate 400 to couple the plurality of battery cells 100 and the side plate 400 to each other. As shown in FIG. 6, in a state in which the side plate 400 is pressed to the side surface of the battery cells 100, the side plate 400 may be spaced apart from the side surface of the battery cell 100 by a distance D. The third coupling portion 630 may be disposed in a space corresponding to the distance D and may extend in the height direction (z-axis direction) to couple the battery cells 100 to the side plate 400.

In an embodiment, the third coupling portion 630 may contact the body portion 410 of the side plate 400. As shown in FIG. 6, the second coupling portion 620 and the third coupling portion 630 may be on opposite sides of the first coupling portion 610. In addition, the second coupling portion 620 may contact the ends of the bent portion 420 and the bus bar holder 300.

In an embodiment, the third coupling portion 630 may be disposed on an extension of the second coupling portion 620. As shown in FIG. 6, the second coupling portion 620 may extend straight in the height direction (z-axis direction), and the third coupling portion 630 may also extend along an imaginary line along which the second coupling portion 620 extends. In an embodiment, the third coupling portion 630 may have the same width as the second coupling portion 620.

In an embodiment, the first coupling portion 610, the second coupling portion 620, and the third coupling portion 630 may be connected to each other to form an integral coupling member 600. When the inner surface 411 is pressed to the side surfaces of the plurality of battery cells 100 in a state in which the coupling member 600 is disposed on the inner surface 411 of the side plate 400, the coupling member 600 disposed at the upper end of the inner surface 411 may be spread thin. A part of the coupling member 600 may be introduced under the top surface of the battery cells 100 and the bottom surface of the bus bar holder 300 to form the first coupling portion 610, and the second coupling portion 620 may be formed in a space between the bus bar holder 300 and the side plate 400. In addition, a third part may extend downwardly from the first coupling portion 610 and may be formed between the side surface of the battery cells 100 and the side plate 400.

As shown in FIG. 6, the second coupling portion 620 may extend upwardly from the upper end of the first coupling portion 610, and the third coupling portion 630 may extend downwardly from the lower end of the first coupling portion 610.

In the battery module 10 according to an embodiment, the plurality of battery cells 100, the bus bar holder 300, and the side plate 400 may be coupled together through the coupling member 600. Therefore, the overall structural rigidity of the battery module 10 may be greatly improved when compared to a case where each component is individually coupled to any one component.

In addition, the coupling member 600 may more firmly couple individual components by being permeated between the plurality of battery cells 100 and the bus bar holder 300, between the bus bar holder 300 and the side plate 400, and between the plurality of battery cells 100 and the side plate 400.

In one or more embodiments, the coupling member 600 may not extend in only one direction, but extend in at least two different directions to more firmly couple the plurality of battery cells 100, the bus bar holder 300, and the side plate 400 to each other.

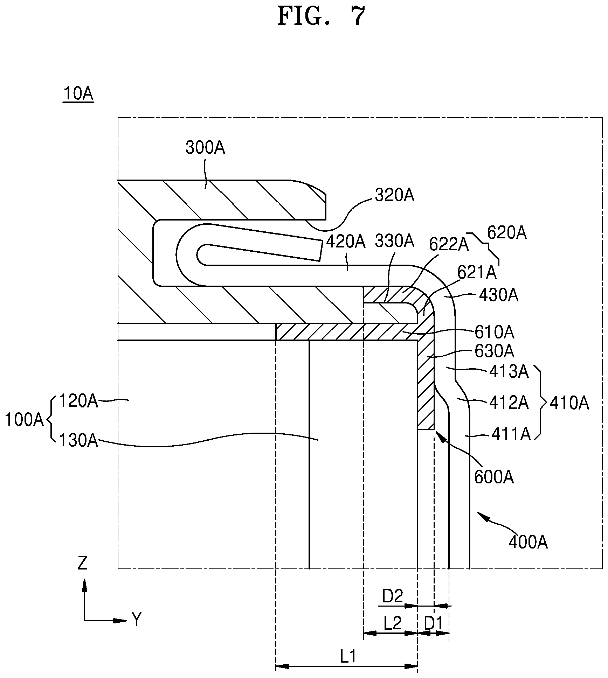

FIG. 7 is an enlarged view of a part of a battery module 10A according to another embodiment.

The battery module 10A according to FIG. 7 may have different configurations of a bus bar holder 300A, a side plate 400A, and a coupling member 600A when compared to the battery module 10 according to the above-described embodiment, and the other configurations may be the same. Hereinafter, for convenience of description, the bus bar holder 300A, the side plate 400A, and the coupling member 600A will be mainly described.

The battery module 10A according to the current embodiment may include a plurality of battery cells 100A, a bus bar (not shown), the bus bar holder 300A, the side plate 400A, and an end plate (not shown).

In an embodiment, the bus bar holder 300A may further include a first receiving groove 330A.

As shown in FIG. 7, the first receiving groove 330A may be a groove formed by cutting a part of an outer (a side facing the side plate 400A) end of the bus bar holder 300A, and may form a step with the bottom surface of an insertion groove 320A. The first receiving groove 330A may extend parallel to the width direction (y-axis direction) of the battery module 10A. Thus, when the side plate 400A is pressed to the side surface of the battery cell 100A, the coupling member 600A disposed on the upper side of the side plate 400A may be compressed and a part thereof may be inserted into the first receiving groove 330A in the bus bar holder 300A.

In an embodiment, the first receiving groove 330A may have a length L2 in the y-axis direction, and a second part 622A of the coupling member 600A inserted into the first receiving groove 330A may also have the length L2. The length L2 may be shorter than the length L1 of the first coupling portion 610A.

In an embodiment, a second coupling portion 620A of the coupling member 600A may include a first part 621A and a second part 622A.

As shown in FIG. 7, the first part 621A may extend from an end of the first coupling portion 610A and may be disposed between a connecting portion 430A and the bus bar holder 300A. Also, the second part 622A may extend from the first part 621A so as to be inserted into the first receiving groove 330A, and thus may be disposed between the first receiving groove 330A and the bent portion 420A. In this way, the first part 621A and the second part 622A of the second coupling portion 620A may increase a coupling area between the bus bar holder 300A and the side plate 400A, and at the same time, couple different parts of the bus bar holder 300A and the side plate 400A, thereby firmly coupling the bus bar holder 300A and the side plate 400A to each other.

In an embodiment, the second part 622A may be disposed to overlap the first coupling portion 610A. As shown in FIG. 7, the first receiving groove 330A may be formed recessed inwardly (along the y-axis direction) at the end of the bus bar holder 300A, and may be disposed to overlap the first coupling portion 610A in the height direction (z-axis direction). Thus, the second part 622A located in the first receiving groove 330A and the first coupling portion 610A may hold the end of the bus bar holder 300A. That is, the end of the bus bar holder 300A may be inserted between the first coupling portion 610A and the second coupling portion 620A like a wedge, such that the bus bar holder 300A and the coupling member 600A may be firmly coupled to each other.

In an embodiment, a body portion 410A of the side plate 400A may include a first region 411A, a second region 412A, and a third region 413A.

As shown in FIG. 7, the first region 411A may have a flat (planar) plate shape and may be spaced apart from the side surface of the battery cell 100A by a distance D1. Moreover, the third region 413A may be spaced apart from the first region 411A in the height direction (z-axis direction), and may be spaced apart from the side surface of the battery cell 100A by a distance D2. In one or more embodiments, the distance D2 may be less than the distance D1. The second region 412A may be disposed between the first region 411A and the third region 413A, and may extend from an upper end of the first region 411A to a lower end of the third region 413A by being inclined (angled) inwardly. Thus, the side plate 400A may include a curved portion in the height direction, which improves the overall structural rigidity of the side plate 400A and the battery module 10A compared to a side plate having a flat body portion.

In an embodiment, the first region 411A may not contact the coupling member 600A, for example, the first region 411A may not contact a third coupling portion 630A.

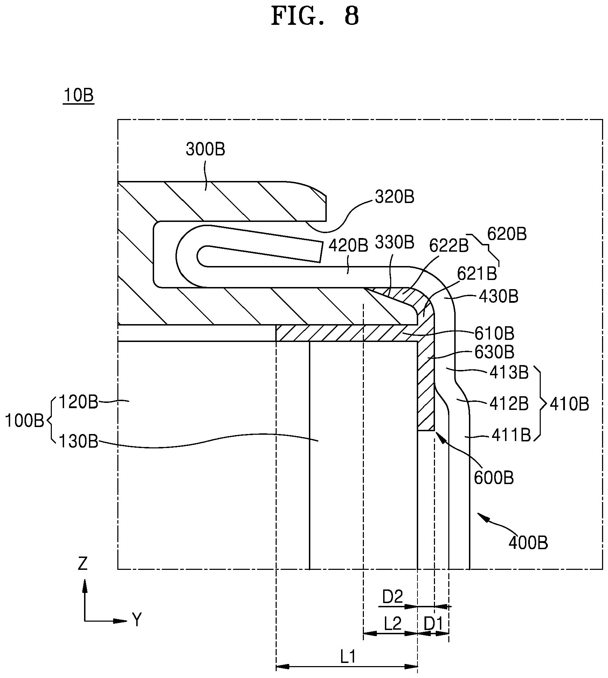

FIG. 8 is an enlarged view of a part of a battery module 10B according to another embodiment.

Compared to the battery module 10A according to the above-described embodiment, the battery module 10B according to FIG. 8 may have different configurations of a bus bar holder 300B and a coupling member 600B, and the other configurations may be the same. Hereinafter, for convenience of a description, the bus bar holder 300B and the coupling member 600B will be described mainly.

The battery module 10B according to the current embodiment may include a plurality of battery cells 100B, a bus bar (not shown), the bus bar holder 300B, a side plate 400B, and an end plate (not shown).

In an embodiment, a first receiving groove 330B of the bus bar holder 300B may include an inclined surface. As shown in FIG. 8, the first receiving groove 330B may extend by being inclined upwardly and narrowing (tapering) toward an inner side in the width direction of the battery module 10B (the Y-axis direction in FIG. 8). Thus, a second part 622B of a second coupling portion 620B inserted into the first receiving groove 330B may also have a shape gradually narrowing (tapering) toward the inner side in the width direction of the battery module 10B.

Due to the first receiving groove 330B having such a shape, the first coupling portion 610B and the second coupling portion 620B may hold the bus bar holder 300B to improve coupling strength between the coupling member 600B and the bus bar holder 300B. In addition, as a sufficiently large thickness of the end of the bus bar holder 300B is provided, the bus bar holder 300B may not be easily damaged even when subject to an external impact. Moreover, an inclined surface of the first receiving groove 330B may widen and thereby increase a contact area between the second part 622B and the first receiving groove 330B, thus further increasing the coupling strength between the coupling member 600B and the bus bar holder 300B.

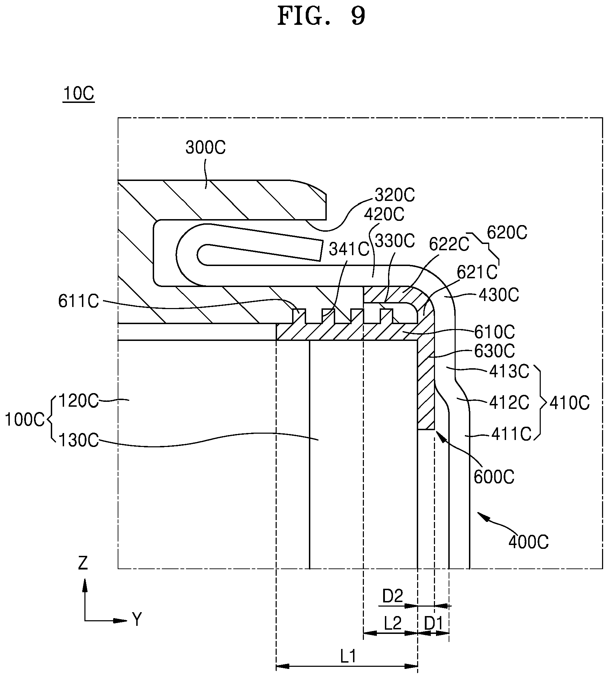

FIG. 9 is an enlarged view of a part of a battery module 10C according to another embodiment.

Compared to the battery module 10A according to the above-described embodiment, the battery module 10C according to FIG. 9 may have different configurations of a bus bar holder 300C and a coupling member 600C, and the other configurations may be the same. Hereinafter, for convenience of a description, the bus bar holder 300C and the coupling member 600C will be described mainly.

The battery module 10C according to the current embodiment may include a plurality of battery cells 100C, a bus bar (not shown), the bus bar holder 300C, a side plate 400C, and an end plate (not shown).

In an embodiment, the bus bar holder 300C of the battery module 10C may further include a first support groove 341C that extends upward in the height direction (the z-axis direction) from a bottom surface of the bus bar holder 300C. As shown in FIG. 9, a plurality of first support grooves 341C may be formed on a bottom surface of the bus bar holder 300C facing a top surface of the battery cell 100C. The plurality of first support grooves 341C may be disposed apart from each other along the width direction (the y-axis direction), and may also be disposed in the length direction of the battery module 10C (x-axis direction).

Accordingly, a part of a first coupling portion 610C introduced between the battery cells 100C and the bus bar holder 300C may be inserted into the first support groove 341C to form a first projection 611C extending upward in the height direction (z-axis direction). A plurality of first projections 611C may increase a contact area between the coupling member 600C and the bus bar holder 300C, thereby increasing coupling strength between the coupling member 600C and the bus bar holder 300C. In particular, the first projection 611C may resist a force applied in the width direction (y-axis direction) of the battery module 10C to prevent the coupling member 600C and the bus bar holder 300C from being separated from each other.

Although FIG. 9 shows four first support grooves 341C and four corresponding first projections 611C disposed in the width direction (y-axis direction) of the battery module 10C, the number thereof is not limited thereto. One, two, three, or five or more first support grooves 341C and first projections 611C may be disposed in the width direction (y-axis direction) of the battery module 10C.

In an embodiment, the first support groove 341C and the first projection 611C may extend continuously in the length direction (x-axis direction) of the battery module 10C without interruption. Thus, the first support groove 341C may have a shape like a long trench in the length direction of the battery module 10C. The first projection 611C may also have a bar shape (or ridge) in the length direction of the battery module 10C.

In another embodiment, a plurality of first support grooves 341C and a plurality of first projections 611C may be disposed apart from each other in the length direction (x-axis direction) of the battery module 10C. In this embodiment, the first support groove 341C and the first projection 611C may be arranged in a zigzag pattern so as not to overlap with the first support groove 341C and the first projection 611C that are adjacent in the length direction of the battery module 10C.

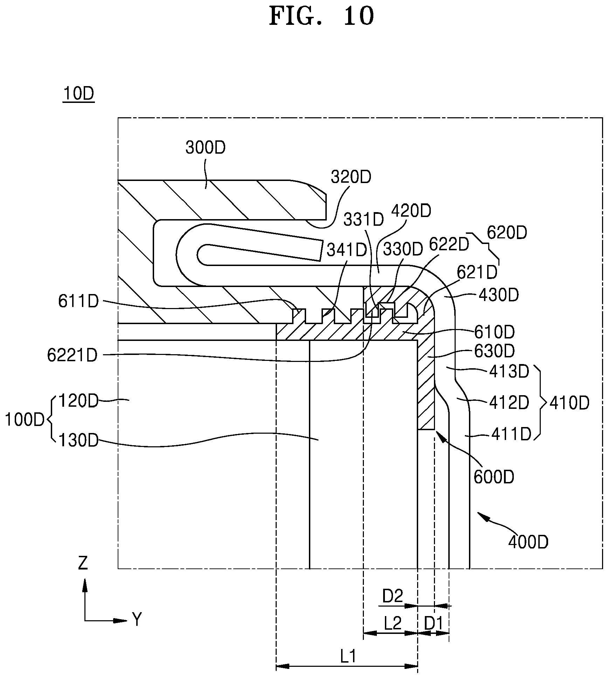

FIG. 10 is an enlarged view of part of a battery module 10D according to another embodiment.

Compared to the battery module 10C according to the above-described embodiment, the battery module 10D according to FIG. 10 may have different configurations of a bus bar holder 300D and a coupling member 600D, and the other configurations may be the same. Hereinafter, for convenience of a description, the bus bar holder 300D and the coupling member 600D will be described mainly.

The battery module 10D according to the current embodiment may include a plurality of battery cells 100D, a bus bar (not shown), the bus bar holder 300D, a side plate 400D, and an end plate (not shown).

In an embodiment, the bus bar holder 300D may further include a second support groove 331D in addition to a first support groove 341D. As shown in FIG. 10, the second support groove 331D may extend downwardly in a height direction (the z-axis direction) from a bottom surface of the first receiving groove 330D, and a plurality of second support grooves 331D may be disposed apart from each other in the width direction of the battery module 10D (the Y-axis direction in FIG. 10). Also, the plurality of second support grooves 331D may be disposed in the length direction (x-axis direction) of the battery module 10C.

Accordingly, a part of a second part 622D of a second coupling portion 620D introduced between the bus bar holder 300D and the side plate 400D may be inserted into the second support groove 331D to form a second projection 6221D that extends downwardly in the height direction (z-axis direction). A plurality of second projections 6221D may increase a contact area between the coupling member 600D and the bus bar holder 300D, thereby increasing coupling strength between the coupling member 600D and the bus bar holder 300D. In one or more embodiments, the second projection 6221D may resist a force applied in the width direction (y-axis direction) of the battery module 10D to prevent the coupling member 600D and the bus bar holder 300D from being separated from each other.

In an embodiment, the plurality of first support grooves 341D and the plurality of second support grooves 331D may be alternately arranged. In an embodiment, as shown in FIG. 9, one first support groove 341D may be disposed between two adjacent second support grooves 331D. Accordingly, in at least some sections, the plurality of first projections 611D and the plurality of second projections 6221D may be alternately arranged. Due to this configuration, coupling strength of the first coupling portion 610D and the second coupling portion 620D with the bus bar holder 300D may be further increased.

Although FIG. 10 shows two second support grooves 331D and two corresponding second projections 6221D being disposed in the width direction (y-axis direction) of the battery module 10D, the number thereof is not limited thereto. One or three or more second support grooves 331D and second projections 6221D may be arranged in the width direction of the battery module 10D.

In an embodiment, the second support groove 331D and the second projection 6221D may continuously extend in the length direction of the battery module 10D without interruption. Thus, the second support groove 331D may have a shape like a long trench in the length direction of the battery module 10D. The second projection 6221D may also have a bar shape (ridge) in the length direction of the battery module 10D.

In another embodiment, the plurality of second support grooves 331D and second projections 6221D may be disposed apart from each other in the length direction of the battery module 10D. In this embodiment, the second support groove 331D and the second projection 6221D may be arranged in a zigzag pattern so as not to overlap with the second support groove 331D and the second projection 6221D that are adjacent in the length direction of the battery module 10D.

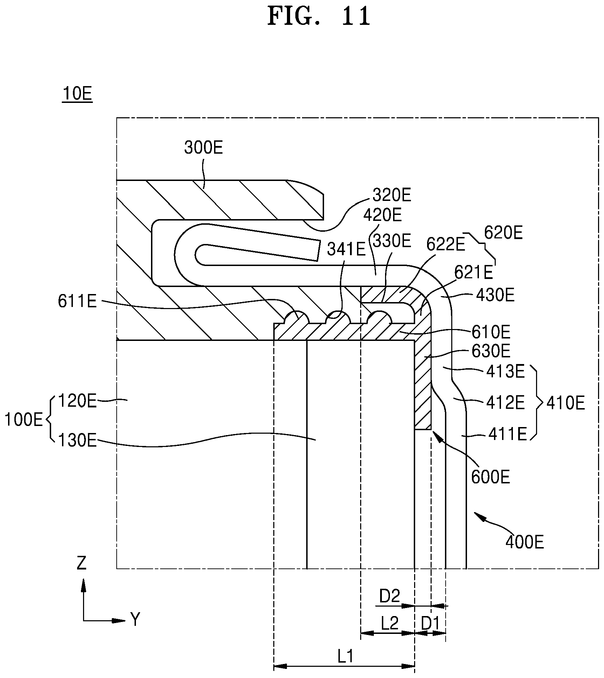

FIG. 11 is an enlarged view of a part of a battery module 10E according to another embodiment.

Compared to the battery module 10C according to the above-described embodiment, the battery module 10E according to FIG. 11 may have different configurations of a bus bar holder 300E and a coupling member 600E, and the other configurations may be the same. Hereinafter, for convenience of a description, the bus bar holder 300E and the coupling member 600E will be described mainly.

The battery module 10E according to the current embodiment may include a plurality of battery cells 100E, a bus bar (not shown), the bus bar holder 300E, a side plate 400E, and an end plate (not shown).

In an embodiment, the bus bar holder 300E of the battery module 10E may further include a first support groove 341E extending upward in a height direction (z-axis direction) from a bottom surface of the bus bar holder 300E. As shown in FIG. 11, a plurality of first support grooves 341E may be formed on a bottom surface of the bus bar holder 300E facing a top surface of the battery cell 100E. The plurality of first support grooves 341E may be disposed apart from each other in the width direction (y-axis direction), and may also be disposed in the length direction of the battery module 10E. Unlike the first support groove 341C shown in FIG. 9, the first support groove 341E may form an inwardly concave curved surface.

Accordingly, a part of a first coupling portion 610E introduced between the battery cell 100E and the bus bar holder 300E may be inserted into the first support groove 341E to form a first projection 611E extending upward in the height direction (z-axis direction). A plurality of first projections 611E may increase a contact area between the coupling member 600E and the bus bar holder 300E, thereby increasing coupling strength between the coupling member 600E and the bus bar holder 300E. The first projection 611E may also have a convex embossed shape corresponding to the shape of the first support groove 341E.

Although FIG. 11 shows three first support grooves 341E and three corresponding first projections 611E disposed in the width direction (y-axis direction) of the battery module 10E, the number thereof is not limited thereto. One, two, three, or four or more first support grooves 341E and first projections 611E may be disposed in the width direction of the battery module 10E.

In an embodiment, the first support groove 341E and the first projection 611E may continuously extend in the length direction (z-axis direction) of the battery module 10E without interruption. In another embodiment, a plurality of first support grooves 341E and first projections 611E may be disposed apart from each other in the length direction of the battery module 10E. In this case, the first support groove 341E and the first projection 611E may be arranged in a zigzag pattern so as not to overlap with the first support groove 341E and the first projection 611E that are adjacent in the length direction of the battery module 10E.

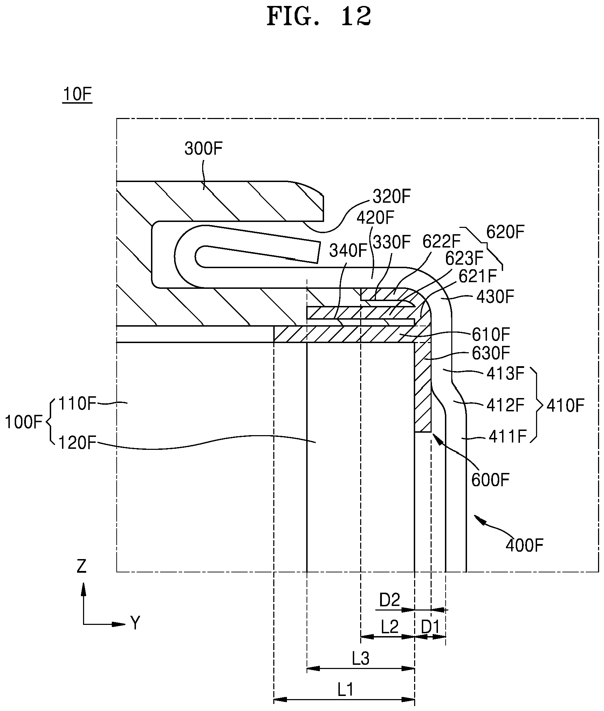

FIG. 12 is an enlarged view of a part of a battery module 10F according to another embodiment.

Compared to the battery module 10A according to the above-described embodiment, the battery module 10F according to FIG. 12 may have different configurations of a bus bar holder 300F and a coupling member 600F, and the other configurations may be the same. Hereinafter, for convenience of a description, the bus bar holder 300F and the coupling member 600F will be described mainly.

The battery module 10F according to the current embodiment may include a plurality of battery cells 100F, a bus bar (not shown), the bus bar holder 300F, a side plate 400F, and an end plate (not shown).

In an embodiment, the bus bar holder 300F of the battery module 10F may include a second receiving groove 340F in addition to the first receiving groove 330F. As shown in FIG. 12, the second receiving groove 340F may be a groove formed at the center of a bottom portion of the bus bar holder 300F in the height direction (Z-axis direction), and may be extend inwardly in the width direction (the Y-axis direction in FIG. 11) of the battery module 10F. The second receiving groove 340F may be disposed below the first receiving groove 330F and may be disposed above the bottom surface of the bus bar holder 300F. Also, the second receiving groove 340F may extend in the length direction of the battery module 10F.

Thus, a part of a second coupling portion 620F introduced between the bus bar holder 300F and the side plate 400F may be inserted into the first receiving groove 330F and the second receiving groove 340F to respectively form a second part 622F and a third part 623F. The third part 623F, together with the second part 622F, may increase a contact area between the coupling member 600F and the bus bar holder 300F, thereby increasing coupling strength between the coupling member 600F and the bus bar holder 300F. In addition, the third part 623F may be disposed to hold the end of the bus bar holder 300F together with the second part 622F, thus firmly supporting the bus bar holder 300F.

In an embodiment, the second receiving groove 340F may have a length L3 in the width direction (Y-axis direction). The length L3 may be equal to or greater than the length L2 of the first receiving groove 330F.

Although FIG. 12 shows one second receiving groove 340F, the number thereof is not limited thereto. Two or more second receiving grooves 340F may be disposed in the height direction, and the plurality of second receiving grooves 340F may have different lengths and/or different thicknesses.

In an embodiment, the second receiving groove 340F may continuously extend in the length direction (X-axis direction) of the battery module 10F without interruption. In another embodiment, a plurality of second receiving grooves 340F may be disposed apart from each other in the length direction of the battery module 10F.

Thus, the end of the bus bar holder 300F may have two or more wedge shapes and may be inserted among a first coupling portion 610F, the second part 622F, and the third part 623F, thus preventing the bus bar holder 300F and the coupling member 600F from being easily separated from each other. In addition, the coupling strength may be increased by increasing a contact area between the coupling member 600F and the bus bar holder 300F.

The battery module according to an embodiment may increase overall structural rigidity thereof by coupling a plurality of battery cells, a bus bar holder, and a side plate together through a coupling member. In one or more embodiments, the coupling member may include a plurality of coupling portions extending in different directions, and the plurality of coupling portions may form an integral coupling member, thereby firmly coupling the battery cells, the bus bar holder, and the side plate to each other.

The battery module according to an embodiment may include various members for increasing a contact area between the coupling member and the bus bar holder, enabling the coupling member and the bus bar holder to be firmly coupled together.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the disclosure as defined by the following claims.
Further Embodiments are set out in the following clauses:
Clause 1. A battery module comprising:
   a plurality of battery cells;
   a bus bar at a side of the plurality of battery cells;
   a bus bar holder supporting the bus bar;
   a side plate on side surfaces of the plurality of battery cells; and
   a coupling member comprising:
      a first coupling portion between the plurality of battery cells and the bus bar holder,
   a second coupling portion between the bus bar holder and the side plate, and
   a third coupling portion between the side plate and the plurality of battery cells,
   wherein the coupling member couples the plurality of battery cells, the bus bar, and the bus bar holder together.
Clause 2. The battery module of clause 1, wherein the first coupling portion, the second coupling portion, and the third coupling portion are connected to each other, and
   wherein the coupling member extends continuously in a length direction of the battery module.
Clause 3. The battery module of clause 1 or clause 2, wherein the first coupling portion is in contact with a top surface of the plurality of battery cells and a bottom surface of the bus bar holder.
Clause 4. The battery module of any preceding clause, wherein the second coupling portion is in a gap between the bus bar holder and the side plate.
Clause 5. The battery module of any preceding clause, wherein the second coupling portion comprises:
   a first part extending in a height direction of the battery module; and
   a second part extending in a width direction of the battery module from an upper end of the first part.
Clause 6. The battery module of clause 5, wherein at least a part of the second part overlaps the first coupling portion in the height direction.
Clause 7. The battery module of clause 5 or clause 6, wherein the side plate comprises:
   a body portion on side surfaces of the plurality of battery cells; and
   a bent portion extending in the width direction of the battery module from an upper end of the body portion,
   wherein the first part of the second coupling portion is between the bus bar holder and the body portion, and
   wherein the second part of the second coupling portion is between the bus bar holder and the bent portion.
Clause 8. The battery module of clause 7, wherein the bus bar holder comprises an insertion groove into which the bent portion is inserted, and wherein a part of the bent portion is in contact with a top surface of the second part of the second coupling portion and another part of the bent portion is in contact with the insertion groove.
Clause 9. The battery module of any one of clauses 5-8, wherein the bus bar holder comprises, at an end of the bus bar holder, a first receiving groove, and
   wherein the second part of the second coupling portion is in the first receiving groove and the end of the bus bar holder is between the second part and the first coupling portion.
Clause 10. The battery module of clause 9, wherein the second part has a length less than a length of the first coupling portion.
Clause 11. The battery module of clause 9 or clause 10, wherein the first receiving groove extends parallel to the width direction of the battery module, and
   wherein the second part has a shape corresponding to a shape of the first receiving groove.
Clause 12. The battery module of any one of clauses 9 - 11, wherein the bus bar holder comprises a second receiving groove, and
   wherein the second coupling portion further comprises a third part extending into the second receiving groove.
Clause 13. The battery module of clause 12, wherein the first coupling portion, the second part, and the third part are spaced apart from one another in the height direction.
Clause 14. The battery module of any one of clauses 1 - 7, wherein the bus bar holder comprises, on a bottom surface of the bus bar holder, a plurality of first support grooves, and
   wherein the first coupling portion comprises a plurality of first projections extending into the plurality of first support grooves.
Clause 15. The battery module of clause 14, wherein the bus bar holder comprises, at an end bus bar holder, a first receiving groove, and
   wherein the first receiving groove comprises a plurality of second support grooves extending downwardly, and
   wherein the second coupling portion comprises a plurality of second projections extending into the plurality of second support grooves.
Clause 16. The battery module of clause 15, wherein at least one of the plurality of first projections is between the plurality of second projections.
Clause 17. The battery module of clause 14, wherein the plurality of first projections have an embossed convex shape in one direction.
Clause 18. The battery module of any one of clauses 9 - 11, wherein the first receiving groove has a cross-sectional area decreasing inwardly in the width direction of the battery module, and
   wherein the second part has a wedge shape corresponding to a shape of the first receiving groove.
Clause 19. The battery module of any preceding clause, wherein the side plate comprises:
   a first region spaced apart from the plurality of battery cells by a first distance; and
   a second region spaced apart from the plurality of battery cells and the bus bar holder by a second distance less than the first distance.
Clause 20. The battery module of clause 19, wherein the first coupling portion and the second coupling portion do not overlap the first region of the side plate.
Clause 21. The battery module of clause 19 wherein the third coupling portion overlaps each of the first region and the second region.

## Claims

1. A battery module comprising:
a plurality of battery cells;
a bus bar at a side of the plurality of battery cells;
a bus bar holder supporting the bus bar;
a side plate on side surfaces of the plurality of battery cells; and
a coupling member comprising:
a first coupling portion between the plurality of battery cells and the bus bar holder,
a second coupling portion between the bus bar holder and the side plate, and
a third coupling portion between the side plate and the plurality of battery cells,
wherein the coupling member couples the plurality of battery cells, the side plate, and the bus bar holder together.

2. The battery module of claim 1, wherein the first coupling portion, the second coupling portion, and the third coupling portion are connected to each other, and
wherein the coupling member extends continuously in a length direction of the battery module.

3. The battery module of claim 1 or claim 2, wherein the first coupling portion is in contact with a top surface of the plurality of battery cells and a bottom surface of the bus bar holder.

4. The battery module of any preceding claim, wherein the second coupling portion is in a gap between the bus bar holder and the side plate.

5. The battery module of any preceding claim, wherein the second coupling portion comprises:
a first part extending in a height direction of the battery module; and
a second part extending in a width direction of the battery module from an upper end of the first part.

6. The battery module of claim 5, wherein at least a part of the second part overlaps the first coupling portion in the height direction.

7. The battery module of claim 5 or claim 6, wherein the side plate comprises:
a body portion on side surfaces of the plurality of battery cells; and
a bent portion extending in the width direction of the battery module from an upper end of the body portion,
wherein the first part of the second coupling portion is between the bus bar holder and the body portion, and
wherein the second part of the second coupling portion is between the bus bar holder and the bent portion
wherein, optionally, the bus bar holder comprises an insertion groove into which the bent portion is inserted, and wherein a part of the bent portion is in contact with a top surface of the second part of the second coupling portion and another part of the bent portion is in contact with the insertion groove.

8. The battery module of any one of claims 5-7, wherein the bus bar holder comprises, at an end of the bus bar holder, a first receiving groove, and
wherein the second part of the second coupling portion is in the first receiving groove and the end of the bus bar holder is between the second part and the first coupling portion.

9. The battery module of claim 8, wherein the first receiving groove extends parallel to the width direction of the battery module, and
wherein the second part has a shape corresponding to a shape of the first receiving groove.

10. The battery module of claim 8 or claim 9, wherein the bus bar holder comprises a second receiving groove, and
wherein the second coupling portion further comprises a third part extending into the second receiving groove,
wherein, optionally, the first coupling portion, the second part, and the third part are spaced apart from one another in the height direction.

11. The battery module of any one of claims 1 - 7, wherein the bus bar holder comprises, on a bottom surface of the bus bar holder, a plurality of first support grooves, and
wherein the first coupling portion comprises a plurality of first projections extending into the plurality of first support grooves.

12. The battery module of claim 11, wherein the bus bar holder comprises, at an end bus bar holder, a first receiving groove, and
wherein the first receiving groove comprises a plurality of second support grooves extending downwardly, and
wherein the second coupling portion comprises a plurality of second projections extending into the plurality of second support grooves,
wherein, optionally, at least one of the plurality of first projections is between the plurality of second projections.

13. The battery module of claim 8 or claim 9, wherein the first receiving groove has a cross-sectional area decreasing inwardly in the width direction of the battery module, and
wherein the second part has a wedge shape corresponding to a shape of the first receiving groove.

14. The battery module of any preceding claim, wherein the side plate comprises:
a first region spaced apart from the plurality of battery cells by a first distance; and
a second region spaced apart from the plurality of battery cells and the bus bar holder by a second distance less than the first distance.

15. The battery module of claim 14, wherein the first coupling portion and the second coupling portion do not overlap the first region of the side plate; and/or
wherein the third coupling portion overlaps each of the first region and the second region.
